# EUROPÄISCHE PATENTSCHRIFT

(11) **EP 4 392 222 B1**
(45) Veröffentlichungstag und Bekanntmachung des Hinweises auf die Patenterteilung: **04.12.2024**
(21) Anmeldenummer: 23704313.8
(22) Anmeldetag: 08.02.2023
(51) Int. Cl.: B29C 45/82, B29C 45/72, F04B 23/02, F04B 23/04, F04B 49/06, F15B 1/26, F15B 21/041, F15B 21/0423, F15B 21/044

(54) **FLUID-KÜHL-FILTER-ANORDNUNG**
FLUID COOLING AND FILTERING ASSEMBLY
ENSEMBLE DE REFROIDISSEMENT ET FILTRATION DE FLUIDE

(30) Priorität: 09.02.2022 DE 102022103070
(43) Veröffentlichungstag der Anmeldung: 03.07.2024
(73) Patentinhaber: ARBURG GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)
(86) Internationale Anmeldenummer: PCT/EP2023/053058
(87) Internationale Veröffentlichungsnummer: WO 2023/152157

(56) Entgegenhaltungen:
- CN-U- 203 081 910
- CN-U- 210 829 984
- CN-U- 214 499 593
- CN-U- 215 039 687
- DE-A1- 4 140 385
- DE-C1- 4 203 062
- DE-U1- 202017 100 053
- JP-A- 2002 327 713
- JP-A- H02 176 544

## Beschreibung

Die vorliegende Erfindung betrifft eine Fluid-Kühl-Filter-Anordnung für eine Maschine zur Verarbeitung von Kunststoffen und anderer plastifizierbarer Massen nach dem Oberbegriff des Anspruchs 1, ein Verfahren zur Filterung und Kühlung eines Fluids für eine Maschine zur Verarbeitung plastifizierbarer Materialien nach dem Oberbegriff des Anspruchs 10 sowie eine Maschine zur Verarbeitung von Kunststoffen und anderer plastifizierbarer Materialien, insbesondere eine Spritzgießmaschine nach dem Oberbegriff des Anspruchs 15.

Zur Produktion präziser Formteile, z.B. aus Kunststoff, werden Maschinen zur Verarbeitung von Kunststoffen und anderer plastifizierbarer Massen, insbesondere Spritzgießmaschinen verwendet, welche in der Regel mehrere Komponenten, beispielsweise eine Einspritzeinheit und eine Schließeinheit oder andere Hydraulikkomponenten aufweisen, welche mittels eines Fluids gekühlt und/oder geschmiert werden müssen. Das Fluid sollte dabei eine gewisse Temperatur nicht überschreiten, da ansonsten die Kühlwirkung des Fluids für die entsprechenden Komponenten bzw. Verbraucher unzureichend sein kann und die Komponenten Schaden nehmen können, was sich negativ auf den Produktionsprozess des Formteils auswirkt. Weiter ist es notwendig, dass das Fluid eine gewisse Reinheit aufweist, sodass die gekühlten Komponenten und/oder deren Fluidkreislauf nicht durch unreines oder verdrecktes Fluid verstopft werden und somit ebenfalls eine unzureichende Kühlwirkung eintritt oder es zum Ausfall der Komponenten kommt.

Bekannt sind zur Kühlung und zur Filtration eines Fluids, z.B. von Öl, im Stand der Technik klassische Konzepte wie eine Rücklauffiltration, bei der das von den Verbrauchern rückfließende Fluid über eine Filter-Kühlerstrecke in den Tank zurückgeführt wird. Hierbei vorteilhaft sind die geringen Kosten der Rücklauffiltration, wobei jedoch nachteilig die Komponenten im Filter-Kühlerstrang auf die hohen Spitzenbelastungen ausgelegt sein müssen.

Alternativ ist eine Nebenstromfiltration zu nennen, bei der das Fluid der Verbraucher in den Tank zurückgeführt und mittels einer zusätzlichen Pumpe ein kontinuierlicher Volumenstrom aus dem Tank entnommen und über eine Filter-Kühlerstrecke zurück in den Tank geführt wird. Vorteilhaft können infolge der kontinuierlichen Zuführmenge die Komponenten im Filter-Kühlerstrang kleiner ausgelegt werden. Nachteilig vermischt sich das verschmutzte und mit Luft angereicherte Fluid im Tank mit dem bereits gefilterten und gekühlten Fluid, wodurch die Effizienz unter der Vermischung leidet.

Beispielsweise ist in der DE 42 03 062 C1 eine hydraulische Anlage mit einem Haupt- und Nebenstromkreislauf und einer Nebenstromfiltration, bestehend aus einem Flüssigkeitsbehälter mit einer Zwischenwand zur begrenzten Abschirmung der aus und in den Flüssigkeitsbehälter gelangenden Flüssigkeitsströme offenbart. Die Förderleitung zur Nebenstromfilterpumpe im Flüssigkeitsbehälter ist unmittelbar neben den einmündenden Leckflüssigkeitsleitungen angeordnet, wobei dieser Bereich vom übrigen Flüssigkeitsbehälter teilweise abgeschirmt ist. Nachteilig bei dieser Lösung ist, dass es zu einer Vermischung von rückfließendem Fluid und bereits filtriertem und gekühltem Fluid kommt. Der Flüssigkeitsbehälter ist zwar teilweise abgeschirmt, jedoch kommt es aufgrund der Komponentenanordnung zu keiner sauberen Trennung von Rücklauf und Ansaugbereich. Aufgrund der fehlenden Fluidleitung mit Beruhigungszone treten in dem Flüssigkeitsbehälter somit Schichtungsprobleme auf. Ebenfalls nachteilig bei dieser Lösung ist, dass das gekühlte und filtrierte Fluid sofort wieder ansaugt wird, sodass das Fluid keine Zeit hat, sich zu "beruhigen" und evtl. gelöste Luft über eine Beruhigungsstrecke zu entgasen.

Die DE 20 2017 100 053 U1 offenbart eine Hydraulik mit einem Fluidtank, welcher aus zwei Kammern, einer Rücklaufkammer und einer Versorgungskammer besteht. Mit einer Pumpe wird Öl aus der kühlen Versorgungskammer angesaugt und zu den Verbraucherkreisen gefördert. Von den Verbraucherkreisen, die das Öl aufheizen, wird Rücköl in die heiße Rücklaufkammer geführt. Die Ölstandhöhen der Kammern werden über entsprechende Füllstandgeber gemessen und sind an eine Regeleinrichtung angeschlossen. Abhängig von der Füllhöhendifferenz und der Öltemperatur wird die Förderleistung der Pumpe erhöht.

In der EP 2 840 239 B1 ist eine Fluid-Kühl-Filter-Anordnung mit einem regelbaren Pumpenmotor offenbart. Die Drehzahl des Pumpenmotors kann in Abhängigkeit von einem Lastzustand einer mit dem Fluid betriebenen Maschine gesteuert werden, wobei eine Sensoreinrichtung den Fluiddruck und die Fluidtemperatur misst und eine Recheneinheit aus einem Messwert den Lastzustand bestimmt.

Die DE 39 31 699 A1 offenbart ein Verfahren zum Kaltstarten von mobilen Arbeitsmaschinen mit einer Verbrennungsmaschine. Über eine Ölvorwärmung soll die notwendige Viskosität des Öls für die Arbeitsmaschine zu erhalten. Mit einem Dieselmotor wird eine Speisekreislaufpumpe angetrieben, welche Hydrauliköl von der Schmutzseite eines Hydrauliktanks ansaugt. Das Hydrauliköl gelangt über ein Fünfwegeventil zum Ölfilter und von dort auf die Reinseite des Hydrauliktanks. Von der Reinseite des Hydrauliktanks wird das Hydrauliköl mittels von dem Dieselmotor angetriebenen Pumpen über Rückführleitungen in die Schmutzseite des Hydrauliktanks zurückgeleitet. Auch hier ist ebenfalls wieder nachteilig, dass das Fluid sofort wieder ansaugt wird, sodass das Fluid keine Zeit hat sich zu "beruhigen" und auszugasen. Der Tank steht unter einem Vordruck, die Rein- und die Schmutzseite sind über ein Überdruckventil verbunden, sodass dem Öl aufgrund vom permanenten Überdruck keine Beruhigungsstrecke zur Verfügung steht.

Das Dokument DE 101 51 058 A1 offenbart einen Flüssigkeitskreislauf mit einem Flüssigkeits-Vorratstank, einer Flüssigkeitspumpe und einem Flüssigkeitsfilter. Der Flüssigkeitskreislauf steht in seinem Vorlauf hinter der Flüssigkeitspumpe unter einem Vordruck und ist in seinem Rücklauf drucklos. Der Flüssigkeitsfilter ist als Hauptstromfilter im drucklosen Rücklauf des Flüssigkeitskreislaufes angeordnet.

Die DE 41 403 85 A1, JP 2002 327713 A, JP H02 176544 A, CN 215 039 687 U, CN 214 499 593 U und CN 210829984 U zeigen Beispiele für im Maschinenständer untergebrachte, mehrkammerige Fluidbehälter.

Ausgehend von diesem Stand der Technik liegt der vorliegenden Erfindung die Aufgabe zugrunde, eine vorteilhaft effektive und verlässliche Kühlung für eine Maschine zur Verarbeitung von Kunststoffen und plastifizierbarer Materialien, insbesondere für eine Spritzgießmaschine, zu ermöglichen.

Diese Aufgabe wird durch eine Fluid-Kühl-Filter-Anordnung für eine Maschine zur Verarbeitung von Kunststoffen und plastifizierbarer Materialien, insbesondere eine Spritzgießmaschine, mit den Merkmalen des Anspruchs 1, durch ein Verfahren zur Filterung und Kühlung eines Fluids für eine Maschine zur Verarbeitung plastifizierbarer Materialien, insbesondere einer Spritzgießmaschine, mit den Merkmalen des Anspruchs 10 sowie durch eine Maschine zur Verarbeitung plastifizierbarer Materialien, insbesondere einer Spritzgießmaschine mit den Merkmalen des Anspruchs 15 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Fluid-Kühl-Filter-Anordnung für eine Maschine zur Verarbeitung von Kunststoffen und plastifizierbarer Materialien, insbesondere eine Spritzgießmaschine, weist eine erste Pumpe z.B. eine Verstellpumpe mit vorgebbarem Fördervolumen auf, welche zum Pumpen wenigstens eines Fluids, z.B. Öl, aus einem ersten Behälter, z.B. einem Tank, Öltank, in einen Kreislauf, z.B. einen Arbeitskreislauf eingerichtet ist. Der Kreislauf versorgt wenigstens einen Verbraucher, z.B. eine Maschine zur Verarbeitung von Kunststoffen und plastifizierbarer Materialien, insbesondere eine Spritzgießmaschine, mit Fluid. Mit dem Fluid werden die Verbraucher gekühlt und/oder geschmiert. Ebenfalls kann das Fluid zur Energieübertragung genutzt werden, da mit dem Fluid z.B. auch Verbraucher bewegt werden. Prinzipiell kann der Kreislauf verschiedene Verbraucher aufweisen, insbesondere eine Spritzgießmaschine, Teile oder Komponenten der Spritzgießmaschine, z.B. eine Schließeinheit, eine Spritzgießeinheit, sowie entsprechende Peripherie, wie z.B. eines Robots.

Weiter weist die Fluid-Kühl-Filter-Anordnung eine zweite Pumpe, z.B. eine Verstellpumpe mit vorgebbarem Fördervolumen auf, welche zum Pumpen des Fluids über wenigstens eine Kühl- und/oder Filtereinrichtung in den ersten Behälter eingerichtet ist. Um vorteilhaft eine effektive und verlässliche Kühlung zu ermöglichen, ist wenigstens ein zweiter, vom ersten Behälter separierter Behälter, z.B. ein Tank, Öltank, vorgesehen, der das Fluid aus dem Kreislauf auffängt und aus dem die zweite Pumpe das Fluid über die Kühl- und/oder Filtereinrichtung in den ersten Behälter pumpt. Separiert in diesem Zusammenhang bedeutet, dass die Behälter und/oder deren Inhalt vollständig und komplett voneinander getrennt sind, sodass Fluid nicht von einem in den anderen Behälter fließen und sich vermischen kann. Beispielsweise können die Behälter räumlich getrennt voneinander angeordnet sein. Vorteilhaft kann sich so selbst bei einem Überlaufen einer der Behälter der Inhalt der Behälter nicht miteinander vermischen. Möglich ist auch, dass die Behälter nebeneinander angeordnet sind, solange sich der Inhalt der Behälter nicht miteinander vermischen kann.

Das "verbrauchte" und/oder warme Fluid aus dem Kreislauf wird zunächst in dem zweiten Behälter aufgefangen. Dort sammelt sich der vom Fluid aufgenommene Schmutz aus dem Kreislauf und der Verbraucher. Das Fluid wird dann mit der zweiten Pumpe über die Kühl- und/oder Filtereinrichtung in den ersten Behälter gepumpt. Durch das Verwenden der zweiten Pumpen wird vorteilhaft verhindert, dass der Schmutz von der ersten Pumpe wieder angesaugt und in den Kreislauf gegeben wird und es somit zu Beschädigungen von Verbrauchern und/oder Komponenten kommen kann.

Weiter vorteilhaft kann durch den vom ersten Behälter separierten zweiten Behälter mittels geeigneter Maßnahmen der Schmutz extrahiert werden, bevor das Fluid der Kühl- und/oder Filtereinrichtung zugeführt wird, wodurch sich vorteilhaft eine effektivere Kühlung und Filterung der Kühl- und/oder Filtereinrichtung ergibt, da weniger Schmutz die Kühl- und/oder Filtereinrichtung verstopfen kann. Beispielsweise können über Magnete erste Grobschmutzpartikel gebunden werden, wodurch vorteilhaft verhindert wird, dass diese Verschmutzung in den Kreislauf gelangt. Weiter vorteilhaft wird mit dem zweiten Behälter auch das erwärmte Fluid vom Rücklauf der Pumpen, z.B. "heißes" Lecköl zentral gesammelt. Durch die höhere Temperaturdifferenz zwischen Fluid vom Rücklauf und dem Kühlmedium der Kühl- und/oder Filtereinrichtung kann eine höhere Kühlleistung erzielt werden, wodurch die Effizienz gesteigert wird.

Im Kreislauf nimmt das Fluid über die Zeit Luft auf. Weiter vorteilhaft hat das Fluid in dem zweiten Behälter Zeit, die im Fluid aufgenommene Luft wieder auszuscheiden. Dadurch, dass sich der Schmutz im zweiten Behälter sammelt, wird der ersten Pumpe im Wesentlichen nur sauberes, gekühltes und entgastes Fluid zur Verfügung gestellt, was die Lebensdauer und Effizienz der ersten Pumpe positiv beeinflusst. Zudem kann vorteilhaft der erste Behälter kleiner dimensioniert werden, da durch den zweiten Behälter ein insgesamt größeres Volumen zur Aufnahme des Fluids bereitsteht. Weiter vorteilhaft kann aufgrund der Separierung der Behälter der Gesamtfluidraum verkleinert werden, weil es durch die geometrische Anordnung der Behälter nicht mehr zu einer Mischtemperatur kommen kann und durch das Einströmen von gekühltem und filtriertem Fluid, möglichst weit entfernt von der ersten Pumpe, das Fluid bei vorteilhaft kleinerem Volumen dennoch genügend Zeit hat, um auszugasen und somit eine Kavitation im Ansaugstrang der ersten Pumpe verhindert wird. Das Gesamtbehältervolumen (in beiden Behältern) kann somit vorteilhaft um ca. 20% gegenüber einer herkömmlichen nicht separierten Ausführung reduziert werden.

Der erste und/oder zweite Behälter weist wenigstens eine Beruhigungszone auf, die wenigstens ein Hindernis, z.B. eine Wand aufweist, welche das Fluid auf eine vorgegebene Strecke zwingt. Vorteilhaft wird dem Fluid somit Zeit gegeben die aufgenommene Luft auszuscheiden und auszugasen. Beispielsweise können als Hindernisse vertikale Ausgangsbleche vorgesehen werden, wodurch das Fluid gezwungen wird, an einem Blech aufzusteigen und an einem anderen Blech nach unten zu steigen, was vorteilhaft das Ausgasen über Luftbläschen begünstigt.

Die Separierung der Behälter kann bevorzugt so erfolgen, dass die Behälter örtlich beabstandet getrennt voneinander angeordnet sind. Möglich ist aber auch, dass die Behälter nebeneinander angeordnet und/oder in einem weiteren Behälter aufgenommen sind und durch eine Trennung voneinander separiert sind.

Der erste und/oder der zweite Behälter können aber auch beispielsweise jeweils ein Volumen aufweisen, welches zumindest dem verwendeten Gesamtfluidvolumen entspricht, sodass vorteilhaft zumindest einer der Behälter das komplette Volumen aufnehmen kann. Dies ist beispielsweise dann von Vorteil, wenn das Fluid einmal komplett gewechselt wird, da so lediglich ein Behälter geleert werden muss. Prinzipiell denkbar sind aber auch andere Volumina der Behälter, z.B. ein geringeres Volumen, da sich für gewöhnlich das komplette Fluidvolumen nicht in einem einzigen Behälter befindet, sondern sich über die Behälter und den Kreislauf und die Verbraucher verteilt.

Um vorteilhaft zu verhindern, dass der erste Behälter und/oder der zweite Behälter mit Fluid überläuft, ist wenigstens die zweite Pumpe zumindest in Abhängigkeit des im zweiten Behälter aus dem Kreislauf aufgefangenen Fluids und/oder in Abhängigkeit des Füllstands des Fluids im ersten Behälter steuerbar. Wird beispielsweise mehr Fluid vom zweiten Behälter aus dem Kreislauf aufgefangen, als die zweite Pumpe Fluid in den ersten Behälter pumpen kann, ist es möglich, die zweite Pumpe entsprechend zu steuern. Beispielsweise kann die Pumpleistung erhöht werden. Ist weiter z.B. der erste Behälter mit einem geringen Volumen ausgeführt, sodass der Füllstand zu "hoch" ist, kann ebenfalls die zweite Pumpe so gesteuert werden, dass der erste Behälter nicht mit Fluid überläuft, wodurch vorteilhaft eine Verschmutzung verhindert wird und Fluid gespart wird. Weiter kann ebenso, wenn sich beispielsweise der Füllstand im ersten Behälter verringert, die zweite Pumpe ebenfalls entsprechend gesteuert werden, indem z.B. die Pumpleistung verringert wird. Möglich ist auch, dass beispielsweise Sensoren den Füllstand im ersten und/oder zweiten Behälter erfassen und die Pumpleistung der ersten und/oder der zweiten Pumpe entsprechend gesteuert wird. Auch ist es denkbar, dass die erste und/oder zweite Pumpe je nach Arbeitsschritt oder Zyklusabschnitt der Maschine gesteuert wird. Beispielsweise können die Pumpen auch während eines Ruhezustands der Maschine währenddessen wenig Fluid benötigt wird entsprechend gesteuert werden, indem z.B. die Pumpleistung verringert wird oder die Pumpen abgeschaltet werden um Energie zu sparen. Ferner vorteilhaft werden durch die Steuerbarkeit der Pumpen auch die baulichen Voraussetzungen geschaffen, dass das Fluid länger im Behälter, z.B. dem ersten und/oder zweiten Behälter verweilen kann und somit mehr Zeit hat auszugasen.

Bevorzugt sind der zweite Behälter und der erste Behälter fluidtechnisch in Reihe angeordnet. Fluidtechnisch bedeutet in diesem Zusammenhang, dass die Anordnung der Behälter vergleichbar z.B. mit einem in Reihe geschalteten Stromkreis ist. Beispielsweise wird das Fluid aus dem Kreislauf, z.B. dem Arbeitskreislauf, in dem zweiten Behälter aufgefangen und wird von dort von der zweiten Pumpe in den ersten Behälter gepumpt, welche das Fluid wiederum in den Kreislauf pumpt. Vorteilhaft wird so der Schmutz im Fluid zunächst im zweiten Behälter gesammelt, bevor das Fluid in den ersten Behälter gepumpt wird. Die Reihenschaltung kann z.B. so aussehen: Kreislauf (Ausgang) - zweiter Behälter - zweite Pumpe - Kühl- und/oder Filtereinrichtung - erster Behälter - erste Pumpe - Kreislauf (Eingang).

Möglich ist auch, dass die erste Pumpe das Fluid über wenigstens eine weitere Kühl- und/oder Filtereinrichtung in den Kreislauf pumpt. Vorteilhaft ergibt sich so eine verbesserte Kühlleistung für die Verbraucher, da das Fluid nochmals gefiltert und/oder gekühlt wird. Die Reihenschaltung kann z.B. so aussehen: Kreislauf (Ausgang) - zweiter Behälter - zweite Pumpe - Kühl- und/oder Filtereinrichtung - erster Behälter - erste Pumpe - weitere Kühl- und/oder Filtereinrichtung - Kreislauf (Eingang).

Ebenfalls kann eine weitere Kühl- und/oder Filtereinrichtung so angeordnet sein, dass das Fluid aus dem Kreislauf zunächst über die weitere Kühl- und/oder Filtereinrichtung vom zweiten Behälter aufgefangen wird. Die Reihenschaltung kann z.B. so aussehen: Kreislauf (Ausgang) - weitere Kühl- und/oder Filtereinrichtung - zweiter Behälter - zweite Pumpe - Kühl- und/oder Filtereinrichtung - erster Behälter - erste Pumpe - Kreislauf (Eingang).

Die weiteren Kühl- und/oder Filtereinrichtungen können auch miteinander kombiniert werden. Die Reihenschaltung kann z.B. so aussehen: Kreislauf (Ausgang) - weitere Kühl- und/oder Filtereinrichtung - zweiter Behälter - zweite Pumpe - Kühl- und/oder Filtereinrichtung - erster Behältererste Pumpe - weitere Kühl- und/oder Filtereinrichtung - Kreislauf (Eingang).

Weiter bevorzugt kann wenigstens die zweite Pumpe zumindest in Abhängigkeit des im zweiten Behälter aus dem Kreislauf aufgefangenen Fluids und/oder in Abhängigkeit des Füllstands des Fluids im ersten und/oder zweiten Behälter steuerbar sein. Weiter bevorzugt kann die erste Pumpe in Abhängigkeit der Verbraucher und/oder des benötigten Bedarfs an Fluid im Kreislauf steuerbar sein. Es ist optional auch möglich, dass die erste und/oder die zweite Pumpe in Abhängigkeit des Fördervolumens der ersten und/oder zweiten Pumpe und/oder des Füllstands des ersten und/oder zweiten Behälters gesteuert werden. Wird beispielsweise die Produktion eines mit dem Fluid gekühlten Verbrauchers bzw. einer entsprechenden Maschine erhöht, kann es sein, dass der Verbraucher mehr Fluid in kürzerer Zeit aus dem Kreislauf benötigt. Um den Bedarf zu liefern, kann die erste Pumpe entsprechend gesteuert werden. Entsprechend müsste dann auch die zweite Pumpe gesteuert werden, da ansonsten die erste Pumpe nach einer gewissen Zeit kein Fluid mehr pumpen kann, da nicht genügend Fluid von der zweiten Pumpe in den ersten Behälter gepumpt wird.

Für eine vorteilhaft platzsparende Ausführung sind bevorzugt der erste Behälter und/oder der zweite Behälter in einem Maschinenständer, z.B. einem Maschinenständer für eine Maschine zur Verarbeitung plastifizierbarer Materialien, insbesondere eine Spritzgießmaschine, angeordnet. Möglich ist beispielsweise auch, dass der Maschinenständer bereits mit entsprechenden Behältern ausgeführt ist. Der erste und der zweite Behälter können nebeneinander oder auch räumlich getrennt voneinander angeordnet sein.

Für eine vorteilhaft besonders platzsparende und integrierte Ausführung sind der erste Behälter und der zweite Behälter Teile eines dritten Behälters und durch wenigstens eine Trennung voneinander separiert. Beispielsweise kann der dritte Behälter zum Auffangen des Fluids aus dem Kreislauf vorgesehen sein. Das Fluid wird an einer bestimmten Stelle des dritten Behälters aufgefangen. Der dritte Behälter kann durch eine Trennung, z.B. eine Trennwand, Blechwand in zwei Behälter bzw. in den ersten und den zweiten Behälter aufgeteilt sein. Beispielsweise kann der Maschinenständer als dritter Behälter fungieren, wobei der erste und der zweite Behälter durch eine Trennwand voneinander separiert sind. Auch ist es möglich, dass der dritte Behälter den ersten und den zweiten Behälter aufweist. Der erste und der zweite Behälter können integrale Bestandteile des dritten Behälter sein, beispielsweise kann der dritte Behälter aus wenigstens einem Stück gefertigt sein, wobei der dritte Behälter wenigstens eine Trennung aufweist, die den dritten Behälter in den ersten und den zweiten Behälter aufteilt.

Um vorteilhaft zu verhindern, dass der erste und/oder der zweite Behälter mit Fluid überlaufen und somit "verschmutztes" Fluid in den Kreislauf gepumpt wird, können bevorzugt der erste und/oder der zweite Behälter in ihrer Größe so ausgeführt sein, dass ein Überlaufen der Behälter verhindert wird. Beispielsweise können der erste und/oder der zweite Behälter wenigstens das Gesamtvolumen des verwendeten Fluids aufweisen.

Das verwendete Fluid kann über die Zeit in qualitativer Hinsicht eine Änderung erfahren. Um vorteilhaft bei einer Verschlechterung der Qualität des Fluids Wartungsempfehlungen auszusprechen, weist bevorzugt der erste und/oder der zweite Behälter wenigstens einen Fluidsensor auf, z. B. ein Partikelsensor, ein Fluidzustandssensor oder ein Ölzustandssensor. Vorteilhaft können so wichtige Parameter der Fluidbeschaffenheit überwacht werden. Weiter kann der Fluidsensor auch den Fluidfüllstand z.B. in einem Behälter erfassen.

Bevorzugt ist die Leistung der ersten und/oder der zweiten Pumpe in Abhängigkeit des ersten und/oder zweiten Behälters dimensioniert. Wird beispielsweise viel Fluid von der zweiten Pumpe vom zweiten Behälter in den ersten Behälter gepumpt und/oder fließt nicht sehr viel Fluid vom Kreislauf in den zweiten Behälter, kann der zweite Behälter entsprechend klein ausgeführt werden.

Um vorteilhaft eine automatisierte Steuerung zu erhalten, ist bevorzugt die zweite Pumpe in Abhängigkeit wenigstens einer Pumpenstellgröße steuer- und/oder regelbar. Die Pumpenstellgröße kann beispielsweise die Leistung der Pumpe sowie weitere pumpenspezifische Größen einstellen, wie z.B. Durchfluss, Öffnungseinstellungen, Betriebsmodi. Beispielsweise kann die Pumpenstellgröße aufgrund von Daten von Sensoren ermittelt werden und so entsprechend die Pumpe steuern und/oder regeln.

Bevorzugt ist die Pumpenstellgröße so gewählt, dass weder der erste Behälter noch der zweite Behälter überlaufen oder in eine Unterdeckung kommen. Wird beispielsweise der Fluidfüllstand in den Behältern und/oder das gepumpte Fluidvolumen erfasst, kann die Pumpengröße entsprechend so gewählt werden, dass kein Behälter überläuft, wodurch ebenfalls eine Verschmutzung durch oder eine Verschwendung von Fluid verhindert wird. Ebenfalls kann, wenn beispielsweise die erste Pumpe mehr Fluid dem Kreislauf zur Verfügung stellen muss, die zweite Pumpe entsprechend geregelt werden, sodass keine Unterdeckung im ersten Behälter auftritt. Bevorzugt kennt die Pumpensteuerung die anfallenden Fluidvolumina und den aktuellen Fluidfüllstand der Behälter (z.B. was fließt abhängig vom Zyklusfortschritt an Fluid von den Verbrauchern in den zweiten Behälter zurück und welchen Bedarf an Fluid liefert die erste Pumpe in den Kreislauf), sodass die Steuerung mit dem aktuellen Zustand entsprechend die Leistung der zweiten Pumpe steuern kann.

Weiter bevorzugt hängt die Pumpenstellgröße von wenigstens einem der folgenden Fluidvolumina pro Zeiteinheit ab: Ein Fluidvolumen, welches aus dem Kreislauf in den zweiten Behälter zurückfließt; ein Fluidvolumen, welches aus dem zweiten Behälter in den ersten Behälter gepumpt wird; ein Fluidvolumen, welches aus dem ersten Behälter in den Kreislauf gepumpt wird. Beispielsweise ist es möglich, die Pumpenstellgröße z.B. nach dem von den Behältern aufgenommenem Volumen pro Zeiteinheit und/oder den Fluidfüllstand durch geeignete Sensoren zu wählen. Ist beispielsweise der Füllstand im ersten Behälter hoch und wird nur wenig Fluid im zweiten Behälter aus dem Kreislauf aufgefangen, kann beispielsweise die Pumpenstellgröße so gesteuert und/oder geregelt werden, dass weniger Fluid vom zweiten Behälter in den ersten Behälter gepumpt wird.

Bevorzugt erfolgt das Einströmen des Fluids in den ersten und/oder zweiten Behälter möglichst weit entfernt von der ersten und/oder zweiten Pumpe, wodurch vorteilhaft dem Fluid Zeit gegeben wird die aufgenommene Luft auszuscheiden und auszugasen. Möglichst weit entfernt ist so zu verstehen, dass das Fluid eine möglichst lange Strecke zwischen dem Einströmen in den Behälter und dem Ansaugen der entsprechenden Pumpe zurücklegen muss, sodass das Fluid genug Zeit zum Ausgasen hat. Möglich ist beispielsweise, dass die Strecke für das Fluid zwischen dem Einströmen des Fluids und dem Ansaugen des Fluids durch die Pumpe vergrößert wird, indem der Behälter vergrößert wird. Auch möglich ist, dass die Pumpen bevorzugt gesteuert werden um den Durchfluss entsprechend zu steuern. Beispielsweise kann die Pumpleistung verringert wird, sodass das Fluid länger im Behälter verweilt und somit länger Zeit bekommt um auszugasen. Die baulichen Voraussetzungen dafür sind durch die steuerbaren Pumpen gegeben.

Weiter bevorzugt ist zwischen dem Einströmen des Fluids in den ersten und/oder zweiten Behälter und der ersten und/oder zweiten Pumpe die wenigstens eine Beruhigungszone vorgesehen, in welcher das Fluid ausgast. Strömt das Fluid beispielsweise in den ersten und/oder zweiten Behälter ein, so kann die Beruhigungszone im ersten und/oder zweiten Behälter zwischen dem Einströmen des Fluids und dem Ansaugen des Fluids mittels der zweiten Pumpe vorgesehen sein. Beispielsweise können im Behälter Hindernisse, z.B. Wände eingefügt werden, welche das Fluid führen und eine Strecke als Beruhigungszone bilden und so das Fluid auf eine möglichst große Strecke zwingen. Vorteilhaft wird dem Fluid somit mehr Zeit gegeben die aufgenommene Luft auszuscheiden und auszugasen. Beispielsweise ist es auch möglich, dass das Fluid innerhalb des Behälters eine gewundene Strecke, z.B. eine mäanderförmige Strecke zurücklegen muss. Beispielsweise kann ein Hindernis, z.B. ein Blech am Boden und ein weiteres Hindernis, z.B. ein weiteres Querblech in Höhe des oberen Fluidniveaus befestigt werden. Das Fluid wird somit z.B. mäanderförmig gezwungen am unteren Blech hochzusteigen und am oberen Blech nach unten zu fließen, wobei vorteilhaft die vertikalen Flächen der Hindernisse das Ausgasen zusätzlich begünstigen, da die Luftbläschen sich an den Wänden der Bleche niederschlagen und nach oben aufsteigen. Die Beruhigungszone steht bevorzugt in Kontakt mit der Umgebung, sodass ein ausreichender Austausch mit der Umgebung gewährleistet ist und das Fluid ausgasen kann.

Die Aufgabe wird zudem durch ein Verfahren zur Filterung und Kühlung eines Fluids für eine Maschine zur Verarbeitung von Kunststoffen und plastifizierbarer Materialien, insbesondere einer Spritzgießmaschine, gelöst, wobei wenigstens ein Fluid aus einem ersten Behälter in einen Kreislauf und Fluid über eine Kühl- und/oder Filterstrecke in den ersten Behälter gepumpt wird. Das Fluid wird aus dem Kreislauf in einem zweiten Behälter, der vom ersten Behälter separiert ist, aufgefangen und wird aus dem zweiten Behälter über die Kühl- und/oder Filterstrecke in den ersten Behälter gepumpt. Vorteilhaft wird der ganze Schmutz aus dem Kreislauf und den Verbraucher im zweiten Behälter gesammelt, wobei durch die Separierung der Behälter verhindert wird, dass der Schmutz von der ersten Pumpe wieder angesaugt wird. Über geeignete Maßnahmen kann die Verschmutzung aus dem zweiten Behälter extrahiert werden, bevor das Fluid der Kühl- und/oder Filterstrecke zugeführt wird. Dadurch ergibt sich vorteilhaft eine höhere Effektivität und längere Lebensdauer der Kühl- und/oder Filterstrecke.

Weiter vorteilhaft wird mit dem zweiten Behälter auch das erwärmte Fluid vom Rücklauf der Pumpen, z.B. "heißes" Lecköl zentral gesammelt, wobei durch eine höhere Temperaturdifferenz zwischen Rücklauffluid, z.B. Rücklauföl, und Kühlmedium eine höhere Kühlleistung und Effizienz erzielt wird.

Im Kreislauf nimmt das Fluid über die Zeit Luft auf. Weiter vorteilhaft hat das Fluid in dem zweiten Behälter Zeit, die im Fluid aufgenommene Luft wieder auszuscheiden. Dadurch, dass sich der Schmutz im zweiten Behälter sammelt, wird der ersten Pumpe im Wesentlichen nur sauberes, gekühltes und entgastes Fluid zur Verfügung gestellt, was vorteilhaft die Lebensdauer und Effizienz der ersten Pumpe positiv beeinflusst.

Das Pumpen des Fluids vom zweiten Behälter in den ersten Behälter wird in Abhängigkeit des im zweiten Behälter aus dem Kreislauf aufgefangenen Fluids, des Fluidfüllstands im ersten Behälter und/oder im zweiten Behälter und/oder des von dem ersten Behälter in den Kreislauf gepumpten Fluids gesteuert. Vorteilhaft kann so auf verschiedenste Änderungen im Kreislauf des Fluids reagiert werden, beispielsweise bei einem erhöhten Verbrauch im Kreislauf kann mehr Fluid im ersten Behälter zur Verfügung gestellt werden unter der Annahme, dass genug Fluid im zweiten Behälter zur Verfügung steht. Ferner vorteilhaft werden durch die Steuerbarkeit der Pumpen die Voraussetzungen geschaffen, dass das Fluid länger im Behälter verweilen kann und somit mehr Zeit hat auszugasen. Beispielsweise kann der Durchfluss der Pumpen gesteuert werden, sodass das Fluid länger im Behälter verweilt und somit mehr Zeit hat auszugasen.

Das Fluid im ersten und/oder zweiten Behälter wird auf wenigstens eine Strecke bezüglich wenigstens einer Beruhigungszone gezwungen. Vorteilhaft verweilt das Fluid länger im ersten und/oder zweiten Behälter und hat somit mehr Zeit um auszugasen.

Bevorzugt werden der zweite Behälter und der erste Behälter fluidtechnisch in Reihe geschalten. Fluidtechnisch bedeutet in diesem Zusammenhang, dass die Anordnung der Behälter vergleichbar z.B. mit einem in Reihe geschaltenen Stromkreis ist. Beispielsweise wird das Fluid aus dem Kreislauf in dem zweiten Behälter aufgefangen und wird von dort von der zweiten Pumpe in den ersten Behälter gepumpt, welche das Fluid wiederum in den Kreislauf pumpt. Vorteilhaft wird so der Schmutz im Fluid zunächst im zweiten Behälter gesammelt. Z.B. können über Magnete erste Grobschmutzpartikel gebunden werden, bevor das Fluid in den ersten Behälter gepumpt wird, was verhindert, dass diese Verschmutzung in den Kreislauf gelangt. Wichtig ist, dass das "verschmutzte" Fluid über wenigstens eine Filterstrecke geführt wird, bevor es von der ersten Pumpe in den Kreislauf, z.B. den Arbeitskreislauf gepumpt wird. Im Kreislauf können sich beispielsweise Regelungskomponenten befinden, welche auch auf kleinste Verschmutzungen empfindlich reagieren. Die Filtration dient somit sowohl der Lebensdauerverbesserung der ersten Pumpe jedoch auch dem Schutz der empfindlichen Regelungskomponenten. Die Reihenschaltung kann beispielsweise so aussehen: Kreislauf (Ausgang) - zweiter Behälter - zweite Pumpe - Kühl- und/oder Filtereinrichtung - erster Behälter - erste Pumpe - Kreislauf (Eingang).

Um vorteilhaft eine Verschmutzung durch und eine Verschwendung von Fluid zu verhindern, wird wenigstens gleich viel Fluid von dem zweiten in den ersten Behälter gepumpt, wie Fluid aus dem Kreislauf in den zweiten Behälter gelangt. Beispielsweise wird im Mittel bei jedem Arbeitspunkt mehr Fluid aus dem zweiten Behälter entnommen, als aus dem Kreislauf in den zweiten Behälter zurückfließt. Vorteilhaft wird so ein gleichmäßiger Fluss an Fluid gewährleistet, sodass eine durchgängige Kühlwirkung erreicht wird. So wird weiter vorteilhaft gewährleistet, dass der zweite Behälter nicht überläuft, wodurch eine Verschmutzung durch und/oder eine Verschwendung von Fluid verhindert wird.

Bevorzugt wird die zweite Pumpe so gesteuert, dass die zweite Pumpe wenigstens gleich viel Fluid von dem zweiten in den ersten Behälter pumpt, wie Fluid aus dem Kreislauf in den zweiten Behälter gelangt. Beispielsweise kann das Volumen der Behälter, insbesondere des ersten Behälters geringer ausfallen und die Gesamtfluidbedarfsmenge reduziert werden, je gleichmäßiger die Fluidübertragung vom zweiten Behälter in den ersten Behälter erfolgt, wodurch vorteilhaft Ressourcen geschont werden.

Bevorzugt wird das Pumpen des Fluids vom zweiten Behälter in den ersten Behälter in Abhängigkeit wenigstens einer Pumpenstellgröße gesteuert. Die Pumpenstellgröße kann sich aus mehreren Daten und/oder Informationen beispielsweise von Sensoren ergeben. Beispielsweise kann sich die Pumpenstellgröße aus dem Füllstand der Behälter, dem Durchfluss der Pumpen sowie dem Material des Fluids ergeben.

Vorteilhaft für eine Verhinderung von Schmutz durch überlaufendes Fluid wird bevorzugt die Pumpenstellgröße so gewählt, dass kein Fluid aus dem ersten Behälter in den zweiten Behälter fließt. Liegen beispielsweise die Behälter nahe beieinander oder sind die Behälter durch eine Wand getrennt, kann es vorkommen, dass "verschmutztes" Fluid aus dem zweiten Behälter ungekühlt und ungefiltert in den ersten Behälter fließt.

Weiter bevorzugt für eine vorteilhaft erhöhte Effektivität verweilt das Fluid im ersten und/oder zweiten Behälter wenigstens solange, bis die im Fluid aufgenommene Luft ausgeschieden ist. Dem Fluid wird im ersten und/oder zweiten Behälter eine gewisse Zeit gegeben, um die im Fluid über die Zeit aufgenommene Luft auszuscheiden. Beispielsweise kann über eine Steuerung der ersten und/oder zweiten Pumpe erfolgen, dass das Fluid für eine längere Zeit im Behälter verweilt, indem z.B. die Pumpleistung verringert wird. Möglich ist auch, dass die Strömungsgeschwindigkeit des Fluids verändert wird und/oder die vom Fluid zurückgelegte Distanz von dessen Einströmung in den ersten und/oder zweiten Behälter bis zur ersten und/oder zweiten Pumpe verändert wird, bevorzugt vergrößert wird.

Die Aufgabe wird zudem durch eine Maschine zur Verarbeitung von Kunststoffen und anderer plastifizierbarer Materialien, insbesondere eine Spritzgießmaschine, gelöst, wobei die Maschine wenigstens eine oben beschriebene Fluid-Kühl-Filter-Anordnung aufweist und/oder ausgeführt, konfiguriert und/oder eingerichtet ist um wenigstens ein oben beschriebenes Verfahren auszuführen.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: eine Kühl-Filter-Anordnung,
- Fig. 2 - 5: schematische, isometrische Ansichten einer Kühl-Filter-Anordnung,
- Fig. 6: eine schematische, isometrische Ansicht einer Kühl-Filter-Anordnung mit eingezeichnetem Fluidfluss,
- Fig. 7: eine schematische (fluidtechnische) Ansicht einer Kühl-Filter-Anordnung,
- Fig. 8a - d: jeweils eine schematische Darstellung einer Behälteranordnung,
- Fig. 9: eine Kühl-Filter-Anordnung mit einer Beruhigungszone,
- Fig. 10: eine Kühl-Filter-Anordnung mit einer Beruhigungszone.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

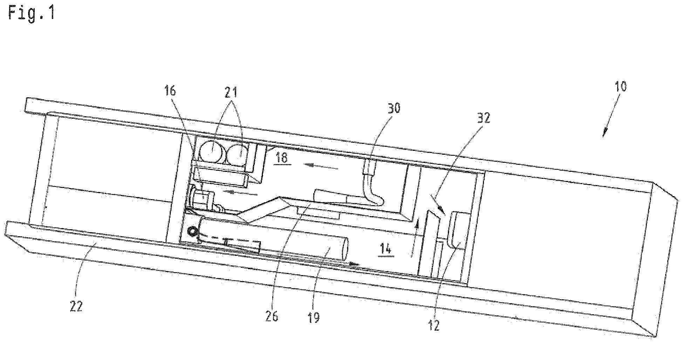

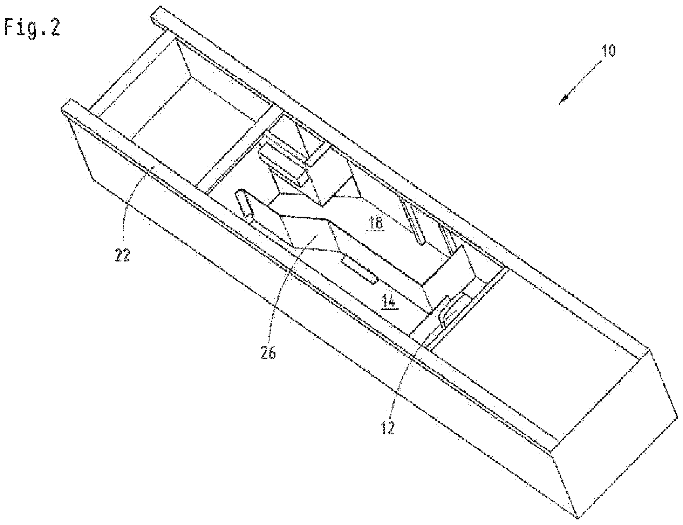

Ein Ausführungsbeispiel zeigt in Fig. 1 eine Kühl-Filter-Anordnung 10 für eine Maschine zur Verarbeitung von Kunststoffen und anderer plastifizierbarer Materialien, insbesondere eine Spritzgießmaschine, mit einer ersten Pumpe 12, welche zum Pumpen wenigstens eines Fluids aus einem ersten Behälter 14 in einen Kreislauf 24 eingerichtet ist, und einer zweiten Pumpe 16, welche zum Pumpen des Fluids über wenigstens eine Kühl- 19 und/oder Filtereinrichtung 21 in den ersten Behälter 14 eingerichtet ist. Der erste Behälter 14 und der zweite Behälter 18 sind in Fig. 1 über eine Trennung 26, beispielsweise eine Wand vollständig voneinander separiert. Das Fluid wird von der zweiten Pumpe 16 aus dem zweiten Behälter 18 über die Kühl- 19 und/oder Filtereinrichtung 21 in den ersten Behälter 14 gepumpt. Der erste Behälter 14 und der zweite Behälter 18 können in einem weiteren Ausführungsbeispiel wenigstens ein Teil eines dritten Behälters 28 sein, wie es schematisch auch in Fig. 2 dargestellt ist. Weiter können auch die erste Pumpe 12 und die zweite Pumpe 14 sowie die Kühl- 19 und/oder Filtereinrichtung 21 im dritten Behälter 28 angeordnet sein, welcher selbst beispielsweise in einem Maschinenständer 22 angeordnet ist. In Fig. 1 wird Fluid aus Schläuchen 30 aus dem Kreislauf 24 in dem zweiten Behälter 18 aufgefangen. Das Fluid fließt beispielsweise entlang der Pfeile 32 im zweiten Behälter 18 zu der zweiten Pumpe 16 bzw. wird von der zweiten Pumpe 16 angesaugt. Die zweite Pumpe 16 pumpt das Fluid über die Kühl- 19 und/oder Filtereinrichtung 21 in den ersten Behälter 14, von wo es von der ersten Pumpe 12 in den Kreislauf 24 gepumpt wird.

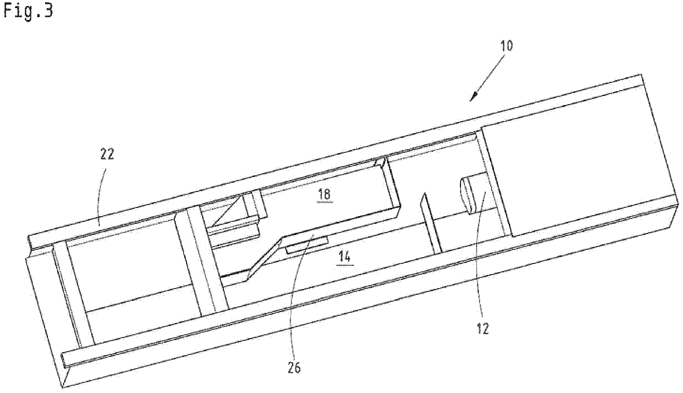

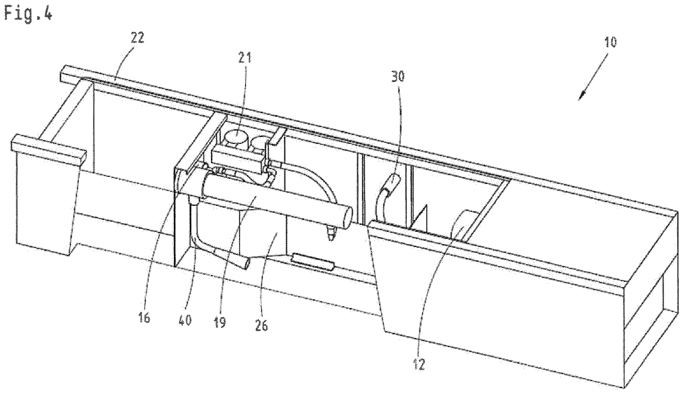

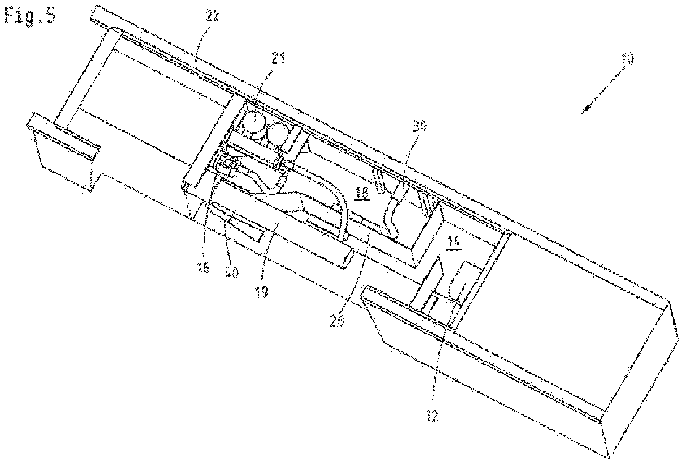

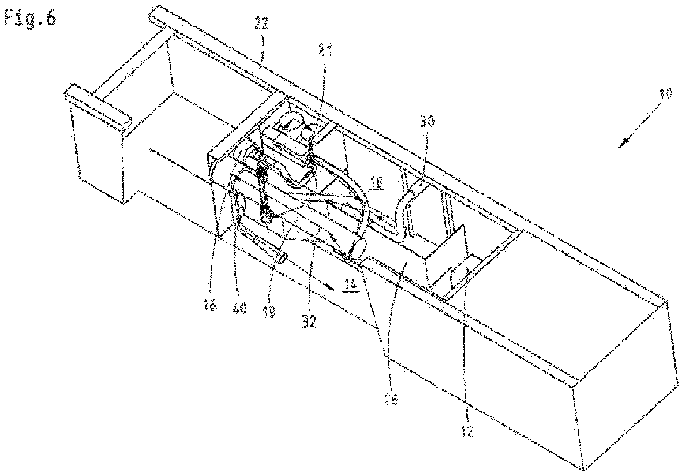

Die Figuren 2 - 6 zeigen jeweils weitere Ausführungsbeispiele einer schematisch, isometrisch dargestellten Kühl-Filter-Anordnung 10 aus unterschiedlichen Perspektiven, wobei in den Fig. 4 und 5 zur Verdeutlichung jeweils ein Stück einer Wand des Maschinenständers 22 freigeschnitten wurde. In Fig. 6 ist mit Pfeilen 32 der Fluidfluss eingezeichnet. Das Fluid kommt im Ausführungsbeispiel gemäß Fig. 6 zunächst aus dem Kreislauf 24 über ein Schlauch 30 in den zweiten Behälter 18. Von dort wird das Fluid mittels der zweiten Pumpe 16 zunächst über die Filtereinrichtung 21 und über die Kühleinrichtung 19 in den ersten Behälter 14 gepumpt. Von dort wird es mittels der ersten Pumpe 12 in den Kreislauf 24 gepumpt.

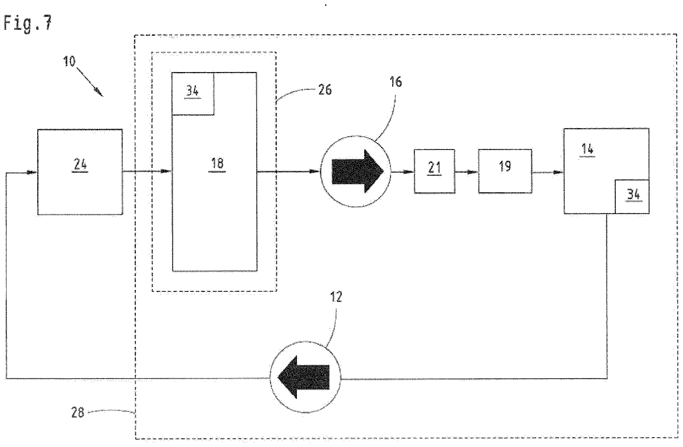

Fig. 7 zeigt ein weiteres Ausführungsbeispiel sowie eine schematische (fluidtechnische) Darstellung der Kühl-Filter-Anordnung 10. Der erste Behälter 14 und der zweite Behälter 18 sind fluidtechnisch in Reihe angeordnet. Das Fluid wird zunächst vom zweiten Behälter 18 aus dem Kreislauf 24 aufgefangen und dann mittels der zweiten Pumpe 16 über die Kühl- 19 und/oder Filtereinrichtung 21 in den ersten Behälter 14 gepumpt, von wo aus es mittels der ersten Pumpe 12 in den Kreislauf 24 gepumpt wird.

Im Ausführungsbeispiel in Fig. 1 ist wenigstens die zweite Pumpe 18 zumindest in Abhängigkeit des im zweiten Behälter 18 aus dem Kreislauf 24 aufgefangenen Fluids und/oder in Abhängigkeit des Füllstands des Fluids im ersten Behälter 14 steuerbar. Beispielsweise kann dies über eine (nicht dargestellte) Steuerung und/oder über eine Maschinensteuerung erfolgen.

Für eine vorteilhafte platzsparende Ausführung sind in einem weiteren Ausführungsbeispiel gemäß Fig. 1 der erste Behälter 14 und/oder der zweite Behälter 18 in einem Maschinenständer 22, beispielsweise in einem Maschinenständer einer Maschine zur Verarbeitung plastifizierbarer Materialien, insbesondere einer Spritzgießmaschine angeordnet.

In einem weiteren Ausführungsbeispiel in Fig. 7 sind der erste Behälter 14 und der zweite Behälter 18 Teile eines dritten Behälters 28 und durch wenigstens eine Trennung 26 voneinander separiert. Der dritte Behälter 28 kann in einem weiteren bevorzugten Ausführungsbeispiel gemäß Fig. 1 in einem Maschinenständer 22 angeordnet sein oder ein Teil des Maschinenständers 22 darstellen. In Fig. 1 bildet der Maschinenständer 22 sozusagen den dritten Behälter 28, während die Trennung 26, z.B. eine Wand, den dritten Behälter in den ersten Behälter 14 und den zweiten Behälter 18 aufteilt. Möglich ist aber auch, dass der Maschinenständer 22 den ersten Behälter 14 und den zweiten Behälter 18 aufweist oder entsprechend ausgeführt ist.

Um vorteilhaft hinsichtlich einer besseren Qualität eine Überwachung des Fluids zu ermöglichen, weist in einem weiteren Ausführungsbeispiel gemäß Fig. 7 der erste Behälter 14 und/oder der zweite Behälter 18 wenigstens einen Fluidsensor 34 auf.

In einem weiteren Ausführungsbeispiel gemäß Fig. 1 ist wenigstens die zweite Pumpe 16 in Abhängigkeit wenigstens einer Pumpenstellgröße steuer- und/oder regelbar. Beispielsweise kann je nach Fluidrücklauf aus dem Kreislauf 24 über die Pumpenstellgröße eingestellt werden, dass die zweite Pumpe 16 mehr oder weniger Fluid aus dem zweiten 18 in den ersten Behälter 14 pumpt. Die Pumpenstellgröße ist vorzugsweise in einem weiteren Ausführungsbeispiel so gewählt, dass weder der erste Behälter 14 noch der zweite Behälter 18 überlaufen oder in eine Unterdeckung kommen.

In einem weiteren Ausführungsbeispiel hängt die Pumpenstellgröße von wenigstens einem der folgenden Fluidvolumina pro Zeiteinheit ab:
- ein Fluidvolumen, welches aus dem Kreislauf 24 in den zweiten Behälter 18 zurückfließt,
- ein Fluidvolumen, welches aus dem zweiten 18 in den ersten Behälter 14 gepumpt wird,
- ein Fluidvolumen, welches aus dem ersten Behälter 14 in den Kreislauf 24 gepumpt wird.

In einem Ausführungsbeispiel gemäß Fig. 7 ist ein Verfahren zur Filterung und Kühlung eines Fluids für eine Maschine zur Verarbeitung von Kunststoffen und plastifizierbarer Materialien, insbesondere einer Spritzgießmaschine, dargestellt, wobei wenigstens ein Fluid aus einem ersten Behälter 14 in einen Kreislauf 24 und Fluid über eine Kühl- 19 und/oder Filtereinrichtung 21 in den ersten Behälter 14 gepumpt wird. Das Fluid aus dem Kreislauf 24 wird in einem zweiten Behälter 18, der vom ersten Behälter 14 separiert ist, aufgefangen und aus dem zweiten Behälter 18 über die Kühl- 19 und/oder Filtereinrichtung 21 in den ersten Behälter 14 gepumpt.

In einem weiteren Ausführungsbeispiel gemäß Fig. 7 werden der zweite Behälter 18 und der erste Behälter 14 fluidtechnisch in Reihe geschalten.

Das Pumpen des Fluids vom zweiten Behälter 18 in den ersten Behälter 14 wird im Ausführungsbeispiel in Fig. 7 in Abhängigkeit des im zweiten Behälter 14 aus dem Kreislauf 24 aufgefangenen Fluids, des Fluidfüllstands im ersten Behälter 14 und/oder im zweiten Behälter 18 und/oder des von dem ersten Behälter 14 in den Kreislauf 24 gepumpten Fluids gesteuert.

In einem weiteren Ausführungsbeispiel gemäß Fig. 7 wird wenigstens gleich viel Fluid von dem zweiten Behälter 18 in den ersten Behälter 14 gepumpt, wie Fluid aus dem Kreislauf 24 in den zweiten Behälter 18 gelangt.

Die zweite Pumpe 16 wird in einem weiteren Ausführungsbeispiel gemäß Fig. 7 so gesteuert, dass wenigstens gleich viel Fluid von dem zweiten Behälter 18 in den ersten Behälter 14 gepumpt wird, wie Fluid aus dem Kreislauf 24 in den zweiten Behälter 18 gelangt.

Das Pumpen des Fluids vom zweiten Behälter 18 in den ersten Behälter 14 wird in einem weiteren Ausführungsbeispiel gemäß Fig. 7 in Abhängigkeit wenigstens einer Pumpenstellgröße gesteuert.

In einem weiteren Ausführungsbeispiel gemäß Fig. 1 wird die Pumpenstellgröße so gewählt, dass kein Fluid aus dem ersten Behälter 14 in den zweiten Behälter 18 fließt.

Um vorteilhaft zu verhindern, dass "verschmutztes" Fluid in den Kreislauf 24 gepumpt wird, können in einem weiteren bevorzugten Ausführungsbeispiel der erste Behälter 14 und/oder der zweite Behälter 18 in ihrer Größe bzw. ihrem Volumen so gewählt bzw. ausgeführt werden, dass ein Überlaufen der Behälter 14, 18 verhindert wird. Beispielsweise können die Behälter 14, 18 wenigstens so groß ausgeführt sein, wie das verwendete Gesamtfluidvolumen.

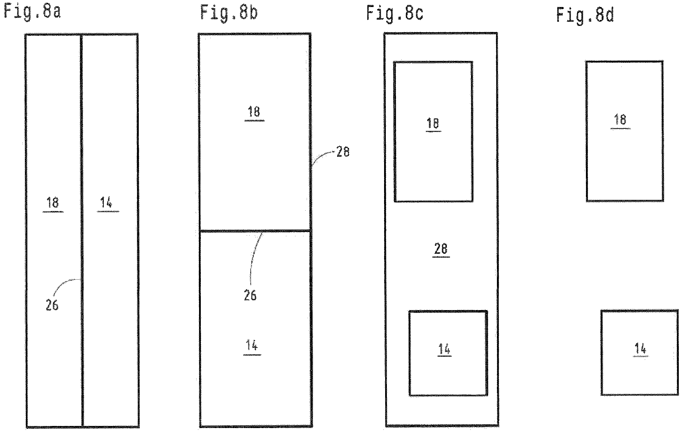

In den Figuren 8a - 8d sind jeweils weitere bevorzugte Ausführungsbeispiele dargestellt, welche die Anordnung der Behälter 14, 18 und 28 zueinander zeigen.

In Fig. 8a sind der erste Behälter 14 und der zweite Behälter 18 nebeneinander angeordnet und durch eine Trennung 26, z.B. eine Wand, voneinander separiert. Beispielsweise können die Behälter 14, 18 zusammengeschoben sein, sodass sich ihre Wände körperlich berühren und somit die Trennung 26 bilden. Es kann aber auch eine zusätzliche Trennung 26 vorgesehen sein.

In Fig. 8b sind der erste Behälter 14 und der zweite Behälter 18 jeweils Teile des dritten Behälters 28 und sind durch eine Trennung 26 voneinander separiert. Prinzipiell ist es auch denkbar, dass der erste Behälter 14 und der zweite Behälter 18 den dritten Behälter 28 insgesamt bilden und durch eine Trennung 26 voneinander separiert sind. Auch denkbar ist, dass der dritte Behälter 28 durch die Trennung 26 den ersten Behälter 14 und den zweiten Behälter 18 bildet.

In Fig. 8c sind der erste Behälter 14 und der zweite Behälter 18 Teile des dritten Behälters 28, wobei der erste Behälter 14 und der zweite Behälter 18 räumlich getrennt voneinander angeordnet sind und somit keine Trennung 26 erforderlich ist. Beispielsweise können die Behälter 14, 18 in dem dritten Behälter 28 angeordnet sein, ohne dass sich ihre Wände körperlich berühren. Vorteilhaft kommt es so selbst bei einem Überlauf eines Behälters 14, 18 nicht zu einer Vermischung des jeweiligen Inhalts. Vorteilhaft ist damit auch, dass im Falle eines Überlaufs eines der Behälter 14, 18 der Überlauf in dem dritten Behälter 28 aufgefangen wird.

In Fig. 8d sind der erste Behälter 14 und der zweite Behälter 18 räumlich getrennt voneinander angeordnet, sodass ebenfalls keine Trennung 26 erforderlich ist. Vorteilhaft kommt es bei einem Überlauf von einem der Behälter 14, 18 zu keiner Vermischung der jeweiligen Inhalte.

In einem weiteren bevorzugten Ausführungsbeispiel gemäß Fig. 4 erfolgt das Einströmen des Fluids in den ersten 14 und/oder zweiten Behälter 18 möglichst weit entfernt von der ersten 12 und/oder zweiten Pumpe 16. Beispielsweise strömt das Fluid in Fig. 4 "unten links" aus einem Schlauch 40 in den ersten Behälter 14 ein, und wird "oben rechts" von der ersten Pumpe 12 weitergepumpt. Verständlicherweise kann sich je nach Ausführung der Behälter der Ort des Einströmens und der Ort des Weiterpumpens des Fluids unterscheiden.

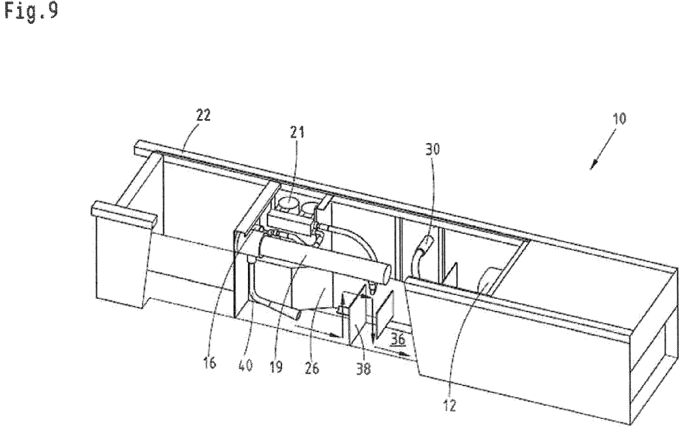

Im Ausführungsbeispiel gemäß Fig. 9 ist in einer Beruhigungszone 36 ein Hindernis 38, z.B. ein Blech, am Boden und ein weiteres Hindernis 38, z.B. ein weiteres Querblech, in Höhe des oberen Fluidniveaus im ersten Behälter 14 befestigt. Der Fluidfluss ist in Fig. 9 mit Pfeilen dargestellt. Das Fluid wird somit gezwungen, am unteren Blech hochzusteigen und am oberen Blech nach unten zu fließen, wobei vorteilhaft die vertikalen Flächen der Hindernisse das Ausgasen zusätzlich begünstigen, da die Luftbläschen sich an den Wänden der Bleche niederschlagen und nach oben aufsteigen. Prinzipiell können beliebig viele Hindernisse 38 je nach Platz im Behälter vorgesehen werden. Prinzipiell kann auch der zweite Behälter 18 oder der erste Behälter 14 und der zweite Behälter 18 eine Beruhigungszone 36 aufweisen. Möglich ist auch, dass im ersten Behälter 14 und/oder zweiten Behälter mehrere Beruhigungszonen 36 vorgesehen sind.

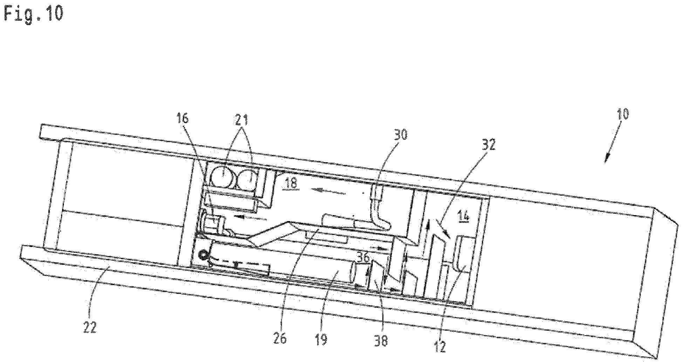

In einem weiteren bevorzugten Ausführungsbeispiel gemäß Fig. 10 weist der erste Behälter 14 eine Beruhigungszone 36 auf, welche drei Hindernisse 38, z.B. Wände aufweist. Prinzipiell kann jedoch eine beliebige Anzahl an Hindernissen 38 vorgesehen sein. Das Fluid wird somit auf einen längeren Weg gezwungen, z.B. mäanderförmig, sodass dem Fluid mehr Zeit zum Ausgasen bleibt. Prinzipiell kann auch der zweite Behälter 18 oder der erste Behälter 14 und der zweite Behälter 18 eine Beruhigungszone 36 aufweisen. Möglich ist auch, dass im ersten Behälter 14 und/oder zweiten Behälter mehrere Beruhigungszonen 36 vorgesehen sind.

In einem weiteren bevorzugten Ausführungsbeispiel können die Ausführungsbeispiele gemäß Fig. 9 und Fig. 10 auch miteinander kombiniert werden. Das Fluid wird somit durch Hindernisse 38, z.B. Bleche am Boden und Querbleche gezwungen am unteren Blech hochzusteigen und am oberen Blech nach unten zu fließen, wobei das Fluid gleichzeitig auf eine gewundene Strecke gezwungen wird.

In einem weiteren bevorzugten Ausführungsbeispiel gemäß Fig. 10 ist zwischen dem Einströmen des Fluids in den ersten 14 und/oder den zweiten Behälter 18 und der ersten 12 und/oder zweiten Pumpe 16 wenigstens eine Beruhigungszone 36 vorgesehen, in welcher das Fluid ausgast.

### Bezugszeichenliste

- 10: Fluid-Kühl-Filter-Anordnung
- 12: erste Pumpe
- 14: erster Behälter
- 16: zweite Pumpe
- 18: zweiter Behälter
- 19: Kühleinrichtung
- 21: Filtereinrichtung
- 22: Maschinenständer
- 24: Kreislauf
- 26: Trennung
- 28: dritter Behälter
- 30: Schlauch
- 32: Pfeil
- 34: Fluidsensor
- 36: Beruhigungszone
- 38: Hindernis
- 40: Schlauch

## Patentansprüche

1. Fluid-Kühl-Filter-Anordnung (10), eingerichtet für eine Maschine zur Verarbeitung von Kunststoffen und anderer plastifizierbarer Materialien, insbesondere eine Spritzgießmaschine, mit einer ersten Pumpe (12), welche zum Pumpen wenigstens eines Fluids aus einem ersten Behälter (14) in einen Kreislauf (24) eingerichtet ist, und einer zweiten Pumpe (16), welche zum Pumpen des Fluids über wenigstens eine Kühl- (19) und/oder Filtereinrichtung (21) in den ersten Behälter (14) eingerichtet ist,
**dadurch gekennzeichnet, dass** wenigstens ein zweiter Behälter (18) vorgesehen ist, der vom ersten Behälter (14) separiert ist und der das Fluid aus dem Kreislauf (24) auffängt und aus dem die zweite Pumpe (16) das Fluid über die Kühl- (19) und/oder Filtereinrichtung (21) in den ersten Behälter (14) pumpt und dass wenigstens die zweite Pumpe (18) zumindest in Abhängigkeit des im zweiten Behälter (18) aus dem Kreislauf (24) aufgefangenen Fluids und/oder in Abhängigkeit des Füllstands des Fluids im ersten (14) und/oder zweiten Behälter (18) steuerbar ist, und
dass der erste (14) und/oder zweite Behälter (18) wenigstens eine Beruhigungszone (36) aufweist und die Beruhigungszone wenigstens ein Hindernis aufweist, welche das Fluid auf eine vorgegebene Strecke zwingt.

2. Anordnung nach Anspruch 1, **dadurch gekennzeichnet, dass** der zweite Behälter (18) und der erste Behälter (14) fluidtechnisch in Reihe angeordnet sind.

3. Anordnung nach einem der vorhergehenden Ansprüche, **dadurch gekennzeichnet, dass** der erste Behälter (14) und/oder der zweite Behälter (18) in einem Maschinenständer (22) angeordnet sind.

4. Anordnung nach einem der vorhergehenden Ansprüche, **dadurch gekennzeichnet, dass** der erste Behälter (14) und der zweite Behälter (18) Teile eines dritten Behälters (28) sind und durch wenigstens eine Trennung (26) voneinander separiert sind.

5. Anordnung nach einem der vorhergehenden Ansprüche, **dadurch gekennzeichnet, dass** der erste Behälter (14) und/oder der zweite Behälter (18) wenigstens einen Fluidsensor (34) aufweisen.

6. Anordnung nach einem der vorhergehenden Ansprüche, **dadurch gekennzeichnet, dass** wenigstens die zweite Pumpe (16) in Abhängigkeit wenigstens einer Pumpenstellgröße steuer- und/oder regelbar ist.

7. Anordnung nach Anspruch 6, **dadurch gekennzeichnet, dass** die Pumpenstellgröße so gewählt ist, dass weder der erste Behälter (14) noch der zweite Behälter (18) überlaufen oder in eine Unterdeckung kommen kann.

8. Anordnung nach Anspruch 6 oder 7, **dadurch gekennzeichnet, dass** die Pumpenstellgröße von wenigstens einem der folgenden Fluidvolumina pro Zeiteinheit abhängt:
- ein Fluidvolumen, welches aus dem Kreislauf (24) in den zweiten Behälter (18) zurückfließt,
- ein Fluidvolumen, welches aus dem zweiten (18) in den ersten Behälter (14) gepumpt wird,
- ein Fluidvolumen welches aus dem ersten Behälter (14) in den Kreislauf (24) gepumpt wird.

9. Anordnung nach einem der vorhergehenden Ansprüche , **dadurch gekennzeichnet, dass** zwischen dem Einströmen des Fluids in den ersten (14) und/oder zweiten Behälter (18) und der ersten (12) und/oder zweiten Pumpe (16) die wenigstens eine Beruhigungszone (36) vorgesehen ist.

10. Verfahren zur Filterung und Kühlung eines Fluids für eine Maschine zur Verarbeitung von Kunststoffen und anderer plastifizierbarer Materialien, insbesondere einer Spritzgießmaschine, wobei wenigstens ein Fluid aus einem ersten Behälter (14) in einen Kreislauf (24) und Fluid über eine Kühl- (19) und/oder Filtereinrichtung (21) in den ersten Behälter (14) gepumpt wird,
**dadurch gekennzeichnet, dass** das Fluid aus dem Kreislauf (24) in einem zweiten Behälter (18), der vom ersten Behälter (14) separiert ist, aufgefangen wird und wobei das Fluid aus dem zweiten Behälter (18) über die Kühl- (19) und/oder Filtereinrichtung (21) in den ersten Behälter (14) gepumpt wird und dass das Pumpen des Fluids vom zweiten Behälter (18) in den ersten Behälter (14) in Abhängigkeit des im zweiten Behälter (14) aus dem Kreislauf (24) aufgefangenen Fluids, des Fluidfüllstands im ersten (14) und/oder im zweiten Behälter (18) und/oder des von dem ersten Behälter (14) in den Kreislauf (24) gepumpten Fluids gesteuert wird, und
dass das Fluid im ersten (14) und/oder zweiten Behälter (18) auf wenigstens eine Strecke bezüglich wenigstens einer Beruhigungszone (36) gezwungen wird, wobei die Beruhigungszone wenigstens ein Hindernis aufweist, welche das Fluid auf die Strecke zwingt.

11. Verfahren nach Anspruch 10, **dadurch gekennzeichnet, dass** der zweite Behälter (18) und der erste Behälter (14) fluidtechnisch in Reihe geschalten werden.

12. Verfahren nach einem der Ansprüche 10 oder 11, **dadurch gekennzeichnet, dass** wenigstens gleich viel Fluid von dem zweiten (18) in den ersten Behälter (14) gepumpt wird, wie Fluid aus dem Kreislauf (24) in den zweiten Behälter (18) gelangt.

13. Verfahren nach einem der Ansprüche 10 bis 12, **dadurch gekennzeichnet, dass** das Pumpen des Fluids vom zweiten Behälter (18) in den ersten Behälter (14) in Abhängigkeit wenigstens einer Pumpenstellgröße gesteuert wird, die vorzugsweise so gewählt wird, dass kein Fluid aus dem ersten Behälter (14) in den zweiten Behälter (18) fließt.

14. Verfahren nach einem der Ansprüche 10 bis 13, **dadurch gekennzeichnet, dass** das Fluid im ersten (14) und/oder zweiten Behälter (18) wenigstens solange verweilt, bis die im Fluid aufgenommene Luft ausgeschieden ist.

15. Maschine zur Verarbeitung von Kunststoffen und anderer plastifizierbarer Materialien, insbesondere eine Spritzgießmaschine, **dadurch gekennzeichnet, dass** die Maschine wenigstens eine Fluid-Kühl-Filter-Anordnung (10) nach einem der Ansprüche 1 bis 9 aufweist und/oder ausgeführt, konfiguriert und/oder eingerichtet ist, um ein Verfahren nach einem der Ansprüche 10 bis 14 auszuführen.

## Claims

1. A fluid cooling/filtering arrangement (10), configured for a machine for processing plastics and other plasticizable materials, in particular an injection molding machine, comprising a first pump (12), which is configured for pumping at least one fluid out of a first container (14) into a circuit (24), and a second pump (16), which is configured for pumping the fluid into the first container (14) by way of at least one cooling (19) and/or filtering device (21),
**characterized in that** there is provided at least one second container (18), which is separated from the first container (14) and which collects the fluid from the circuit (24) and out of which the second pump (16) pumps the fluid into the first container (14) by way of the cooling (19) and/or filtering device (21), and **in that** at least the second pump (18) is controllable at least depending on the fluid collected in the second container (18) from the circuit (24) and/or depending on the filling level of the fluid in the first (14) and/or the second container (18), and
that the first (14) and/or the second container (18) comprises at least one calming zone (36) and the calming zone comprises at least one obstacle that forces the fluid onto a predetermined path.

2. The arrangement according to claim 1, **characterized in that** the second container (18) and the first container (14) are arranged fluidically in series.

3. The arrangement according to one of the preceding claims, **characterized in that** the first container (14) and/or the second container (18) are arranged in a machine base (22).

4. The arrangement according to one of the preceding claims, **characterized in that** the first container (14) and the second container (18) are parts of a third container (28) and are separated from one another by at least one partition (26).

5. The arrangement according to one of the preceding claims, **characterized in that** the first container (14) and/or the second container (18) comprise at least one fluid sensor (34).

6. The arrangement according to one of the preceding claims, **characterized in that** at least the second pump (16) is controllable by open- and/or closed-loop control depending on at least one pump variable.

7. The arrangement according to claim 6, **characterized in that** the pump variable is selected such that neither the first container (14) nor the second container (18) can overflow or undergo a shortfall.

8. The arrangement according to claim 6 or 7, **characterized in that** the pump variable depends on at least one of the following fluid volumes per unit time:
- a fluid volume that flows back into the second container (18) from the circuit (24);
- a fluid volume that is pumped out of the second container (18) and into the first container (14);
- a fluid volume that is pumped out of the first container (14) and into the circuit (24).

9. The arrangement according to one of the preceding claims, **characterized in that** the at least one calming zone (36) is provided between the inflow of the fluid into the first container (14) and/or the second container (18) and the first pump (12) and/or the second pump (16).

10. A method for filtering and cooling a fluid for a machine for processing plastics and other plasticizable materials, in particular an injection molding machine, wherein at least one fluid is pumped out of a first container (14) and into a circuit (24), and fluid is pumped into the first container (14) by way of a cooling (19) and/or filtering device (21),
**characterized in that** the fluid is collected from the circuit (24) in a second container (18) which is separated from the first container (14), and **in that** the fluid is pumped out of the second container (18) and into the first container (14) by way of the cooling (19) and/or filtering device (21), and **in that** pumping the fluid from the second container (18) into the first container (14) is controlled depending on the fluid collected from the circuit (24) in the second container (14), the fluid filling level in the first (14) and/or the second container (18), and/or the fluid that is pumped into the circuit (24) from the first container (14), and
that the fluid in the first (14) and/or the second container (18) is forced on at least one path in respect of at least one calming zone (36), wherein the at least one calming zone comprises at least one obstacle that forces the fluid onto the path.

11. The method according to claim 10, **characterized in that** the second container (18) and the first container (14) are connected fluidically in series.

12. The method according to one of claims 10 or 11, **characterized in that** at least as much fluid is pumped from the second container (18) into the first container (14) as reaches the second container (18) from the circuit (24).

13. The method according to one of claims 10 to 12, **characterized in that** pumping the fluid from the second container (18) into the first container (14) is controlled depending on at least one pump variable, which is preferably selected such that no fluid flows out of the first container (14) into the second container (18).

14. The method according to one of claims 10 to 13, **characterized in that** the fluid remains in the first (14) and/or the second container (18) at least until the air taken up in the fluid has been discharged.

15. A machine for processing plastics and other plasticizable materials, in particular an injection molding machine, **characterized in that** the machine comprises at least one fluid cooling/filtering arrangement (10) as claimed in one of claims 1 to 9 and/or takes a form, is configured and/or is set up to carry out a method as claimed in one of claims 10 to 14.

## Revendications

1. Appareil de refroidissement et filtration de fluide (10), conçu pour une machine pour le traitement de matières plastiques et d'autres matériaux plastifiables, en particulier une machine de moulage par injection, comportant une première pompe (12) qui est conçue pour le pompage d'au moins un fluide d'un premier conteneur (14) vers un circuit (24), et une deuxième pompe (16) qui est conçue pour le pompage du fluide au moyen d'au moins un dispositif de refroidissement (19) et de filtration (21) vers le premier conteneur (14),
**caractérisé en ce qu'**au moins un deuxième conteneur (18) est prévu, ce deuxième conteneur (18) étant séparé du premier conteneur (14) et recueillant le fluide du circuit (24), et à partir duquel la deuxième pompe (16) pompe le fluide au moyen du dispositif de refroidissement (19) et de filtration (21) et le transfère dans le premier conteneur (14) et **en ce qu'**au moins la deuxième pompe (18) est pilotable au moins en fonction du fluide recueilli dans le deuxième conteneur (18) provenant du circuit (24) et/ou en fonction de l'état remplissage du fluide dans le premier (14) et/ou le deuxième (18) conteneur, et
**en ce que** le premier (14) et/ou le deuxième (18) conteneur comprend au moins une zone de tranquillisation (36) et cette zone de tranquillisation présente au moins un obstacle qui force le fluide à parcourir un trajet prédéterminé.

2. Appareil selon la revendication 1, **caractérisé en ce que** le deuxième conteneur (18) et le premier conteneur (14) sont disposés en série de manière fluidique.

3. Appareil selon l'une des revendications précédentes, **caractérisé en ce que** le premier conteneur (14) et/ou le deuxième conteneur (18) sont disposés dans un support de machine (22).

4. Appareil selon l'une des revendications précédentes, **caractérisé en ce que** le premier conteneur (14) et le deuxième conteneur (18) sont des parties d'un troisième conteneur (28) et sont séparés l'un de l'autre par au moins une paroi (26).

5. Appareil selon l'une des revendications précédentes, **caractérisé en ce que** le premier conteneur (14) et/ou le deuxième conteneur (18) comprennent au moins un détecteur de fluide (34).

6. Appareil selon l'une des revendications précédentes, **caractérisé en ce qu'**au moins une deuxième pompe (16) est pilotable et/ou réglable en fonction d'au moins une grandeur de réglage de pompe.

7. Appareil selon la revendication 6, **caractérisé en ce que** la grandeur de réglage de pompe est choisie de telle manière que ni le premier conteneur (14) ni le deuxième conteneur ne déborde ou ne puisse être en déficit.

8. Appareil selon la revendication 6 ou 7, **caractérisé en ce que** la grandeur de réglage de pompe dépend d'au moins l'un des volumes de fluide par unité de temps suivants :
- un volume de fluide qui retourne du circuit (24) vers le deuxième conteneur (18),
- un volume de fluide qui est pompé du deuxième (18) vers le premier (14) conteneur,
- un volume de fluide qui est pompé du premier conteneur (14) vers le circuit (24).

9. Appareil selon l'une des revendications précédentes, **caractérisé en ce qu'**entre l'entrée du fluide dans le premier (14) et/ou le deuxième conteneur (18) et la première (12) et/ou la deuxième pompe (16), la ou les zone(s) de tranquillisation (36) sont prévues.

10. Procédé de filtration et de refroidissement d'un fluide pour une machine pour le traitement de matières plastiques et d'autres matériaux plastifiables, en particulier une machine de moulage par injection, dans lequel au moins un fluide est pompé d'un premier conteneur (14) vers un circuit (24) et du fluide est pompé au moyen d'un dispositif de refroidissement (19) et/ou de filtration (21) vers le premier conteneur (14),
**caractérisé en ce que** le fluide provenant du circuit (24) est recueilli dans un deuxième conteneur (18), lequel est séparé du premier conteneur (14) et dans lequel le fluide est pompé du deuxième conteneur (18) au moyen de l'Dispositif de refroidissement (19) et/ou de filtration (21) vers le premier conteneur (14), et **en ce que** le pompage du fluide du deuxième conteneur (18) vers le premier conteneur (14) est piloté en fonction du fluide provenant du circuit (24) recueilli dans le deuxième conteneur (14), de l'état de remplissage dans le premier (14) et/ou dans le deuxième (18) conteneur et/ou du fluide pompé du premier conteneur (14) vers le circuit (24), et
**en ce que** le fluide dans le premier (14) et/ou le deuxième conteneur (18) est forcé à parcourir au moins un trajet en relation avec au moins une zone de tranquillisation (36), la zone de tranquillisation présentant au moins un obstacle forçant le fluide à parcourir le trajet.

11. Procédé selon la revendication 10, **caractérisé en ce que** le deuxième conteneur (18) et le premier conteneur (14) sont connectés en série de manière fluidique.

12. Procédé selon l'une des revendications 10 ou 11, **caractérisé en ce qu'**il est pompé une quantité de fluide du deuxième conteneur (18) vers le premier conteneur (14) au moins égale à la quantité de fluide allant du circuit (24) au deuxième conteneur (18).

13. Procédé selon l'une des revendications 10 à 12, **caractérisé en ce que** le pompage du fluide du deuxième conteneur (18) vers le premier conteneur (14) est piloté en fonction d'au moins une grandeur de réglage de pompe qui est de préférence choisie de telle manière qu'il n'y ait pas de fluide circulant du premier conteneur (14) vers le deuxième conteneur (18).

14. Procédé selon l'une des revendications 10 à 13, **caractérisé en ce que** le fluide séjourne dans le premier (14) et/ou le deuxième conteneur (18) au moins jusqu'à ce que l'air présent dans le fluide soit éliminé.

15. Machine pour le traitement de matières plastiques et d'autres matériaux plastifiables, en particulier, machine de moulage par injection, **caractérisée en ce que** la machine comprend au moins un appareil de refroidissement et de filtration de fluide (10) selon l'une des revendications 1 à 9 et/ou est réalisée, configurée et/ou équipée pour mettre en oeuvre un procédé selon l'une des revendications 10 à 14.
